# EUROPÄISCHE PATENTANMELDUNG

(11) **EP 2 036 455 A1**
(43) Veröffentlichungstag der Anmeldung: **18.03.2009**
(21) Anmeldenummer: 07018198.7
(22) Anmeldetag: 17.09.2007
(51) Int. Cl.: A47B 47/04, F16B 12/24, F16B 12/46

(54) **Eckverbindungsbeschlag**

(71) Anmelder: Sikora, Günter, 4400 Steyr (AT)
(72) Erfinder: Sikora, Günter, 4400 Steyr (AT); Sikora, Gerhard, 4400 St. Ulrich/Steyr (AT)
(74) Vertreter: Torggler, Paul Norbert

(57) **Zusammenfassung**

Eckverbindungsbeschlag (1), insbesondere für Möbel, mit einem dübelförmigen Verbindungselement (2) und einem plattenförmigen Befestigungselement (3) mit wenigstens einer Aufnahme (4, 4') für ein Befestigungsmittel (8), wobei das dobelförmige Verbindungselement (2) und das plattenförmigen Befestigungselement (3) miteinander verbunden sind und im Wesentlichen Normal zueinander verlaufen und wobei das dübelförmige Verbindungselement (2) zwei Endabschnitte (E, E') und einen Mittelabschnitt (M) aufweist und das plattenförmige Befestigungselement (3) im Mittelabschnitt (M) des dübelförmigen Verbindungselementes (2) mit diesem verbunden ist.

## Beschreibung

Die Erfindung betrifft einen Eckverbindungsbeschlag, insbesondere für Möbel, mit einem dübelförmigen Verbindungselement und einem plattenförmigen Befestigungselement mit wenigstens einer Aufnahme für ein Befestigungsmittel, wobei das dübelförmige Verbindungselement und das plattenförmigen Befestigungselement miteinander verbunden sind und im Wesentlichen Normal zueinander verlaufen.

Eckverbindungsbeschläge für Möbel sind in verschiedenen Formen bekannt geworden. Eine Gattung dieser Beschläge ist zweiteilig ausgebildet und besteht aus einem Fertigungsteil in Form eines flachen zylindrischen Gehäuses, in dem ein verdrehbarer Riegel angeordnet ist, der mit einem Bolzenteil in einem zweiten Möbelbauteil, der einen hinterschnittenen Kopf aufweist und in einem zweiten Möbelbauteil randseitig verankert ist, zusammen wirkt. Da die zylindrischen Gehäuse der Verriegelungsteile relativ groß sein müssen, um darin die Riegelmechanik unterbringen zu können, müssen an den Möbelbauteilen randseitig entsprechend große Bohrungen angeordnet werden. Darüber hinaus setzen derartige Beschläge voraus, dass die Aufnahmebohrungen für die Buchsen sehr exakt sein müssen, damit die zu verbindenden Möbelbauteile kantengleich und bündig zueinander liegen.

Darüber hinaus ist aus der AT 390 481 B ein Möbeleckverbindungsbeschlag bekannt, bei dem an einem zylindrischen Zapfen mit einer Bohrung zur Aufnahme einer Befestigungsschraube ein laschenartiger Ansatz seitlich vorsteht, der ebenfalls eine Bohrung zur Aufnahme einer Befestigungsschraube aufweist. Dabei liegen die Achsen der Bohrungen für die Befestigungsschrauben im Wesentlichen parallel zueinander. Mit diesem Möbeleckverbindungsbeschlag kann zwar eine sichere und feste Verankerung des Zapfens in der einen Platte sichergestellt werden und können beim Setzen der Bohrlöcher auftretende Ungenauigkeiten bis zu einem bestimmten Maße ausgeglichen werden, allerdings erfolgt die Verbindung der beiden Möbelteile untereinander ausschließlich über die im laschenartigen Ansatz eingebrachte Befestigungsschraube. Als nachteilig an diesem Stand der Technik hat es sich herausgestellt, dass ein derartiger Beschlag nicht geeignet ist, den zwischen den Bauteilen der Eckverbindung auftretenden Scherkräften in zufriedenstellendem Ausmaß entgegenzuwirken.

Ausgehend von diesem Stand der Technik hat es sich die Erfindung zur Aufgabe gemacht, einen neuartigen Eckverbindungsbeschlag zu schaffen, der die vorbeschriebenen Nachteile vermeidet, eine stabile Eckverbindung auch bei auftretenden Scherkräften sicherstellt und zudem eine insgesamt kostengünstige Lösung darstellt.

Zur Lösung dieser Aufgabe sieht die Erfindung vor, dass das dübelförmige Verbindungselement zwei Endabschnitte und einen Mittelabschnitt aufweist und das plattenförmige Befestigungselement im Mittelabschnitt des dübelförmigen Verbindungselementes mit diesem verbunden ist. Dabei sieht ein bevorzugtes Ausführungsbeispiel der Erfindung vor, dass der Eckverbindungsbeschlag zwischen den die Eckverbindung bildenden Bauteilen über das dübelförmige Verbindungselement als die Bauteile verbindender Dübel und über das plattenförmige Befestigungselement und einen der beiden Endabschnitte des dübelförmigen Verbindungselementes als ein die Bauteile verbindender Winkel ausgebildet ist.

Anders ausgedrückt, stellt der erfindungsgemäße Eckverbindungsbeschlag eine Kombination eines die beiden, die Eckverbindung bildenden Bauteile verbindenden Dübels und eines die beiden, die Eckverbindungen bildenden Bauteile verbindenden Winkels dar, wobei der eine Schenkel des Winkels vom plattenförmigen Befestigungselement und der andere Schenkel des Winkels von einem der Endabschnitte des Dübels gebildet wird.

Dabei führt das dübelförmige Verbindungselement die beiden Bauteile in der gewünschten Position zusammen und gibt der Eckverbindung die nötige Stabilität gegen jegliche Belastung. Über das plattenförmige Befestigungselement erfolgt zum Einen zusätzlich eine Befestigung mit dem zweiten Bauteil, zum Anderen wird die Stabilität der Dübelverbindung erhöht und darüber hinaus wird der Endabschnitt des dübelförmigen Verbindungselementes zusätzlich in den zweiten Bauteil gedrückt und verspannt.

Gemäß einem weiteren Ausführungsbeispiel der Erfindung sind das dübelförmige Verbindungselement und das plattenförmige Befestigungselement fest miteinander verbunden, obgleich es durchaus denkbar wäre, das plattenförmige Befestigungselement bewegbar, beispielsweise um die Längsachse des dübelförmigen Verbindungselementes drehbar, anzuordnen.

Eine besonders stabile Eckverbindung wird dann erreicht, wenn gemäß einer weiteren Ausführungsform der Erfindung das dübelförmige Verbindungselement und das plattenförmige Befestigungselement einstückig ausgebildet sind, wobei unter anderem eine günstige Verteilung der einwirkenden Kräfte erzielt wird, wenn das dübelförmige Verbindungselement und das plattenförmige Befestigungselement im Wesentlichen T-förmig miteinander verbunden sind.

Um sicherzustellen, dass die die Eckverbindung bildenden Bauteile kantengleich miteinander verbunden werden können, sieht ein weiteres Ausführungsbeispiel der Erfindung vor, dass wenigstens ein Befestigungsmittel zum dübelförmigen Verbindungselement im Wesentlichen parallel verlaufend am Befestigungselement angeordnet bzw. anordenbar ist.

Gemäß einer weiteren Ausführungsform der Erfindung weist die Aufnahme des plattenförmigen Befestigungselementes eine Durchtrittsöffnung und einen geschlossenen Umfangsrand auf.

Weiters kann erfindungsgemäß vorgesehen sein, dass wenigstens ein Befestigungsmittel von einer in die Aufnahme des Befestigungselementes einbringbaren Schraube gebildet ist. Aber auch andere form- bzw. reibschlüssig wirkende Befestigungsmittel, wie beispielsweise Stifte oder Schnappverbindungen, können zur Anwendung gelangen.

Ein besonders fester und sicherer Sitz des Eckverbindungsbeschlages an einem die Eckverbindung bildenden Bauteil wird erreicht, wenn das dübelförmige Verbindungselement eine in Längsrichtung verlaufende Durchtrittsöffnung zur Aufnahme eines weiteren Befestigungsmittels aufweist, wobei es sich wiederum als günstig herausgestellt hat, wenn das weitere Befestigungsmittel von einer Befestigungsschraube gebildet ist.

Dabei ergibt sich eine besonders stabile Verbindung, wenn das wenigstens eine Befestigungsmittel für das Befestigungselement und das weitere Befestigungsmittel für das dübelförmige Verbindungselement derart angeordnet bzw. anordenbar sind, dass das wenigstens eine Befestigungsmittel und das weitere Befestigungsmittel bei hergestellter Eckverbindung in verschiedene Bauteile der Eckverbindung eingreifen.

Eine dauerhafte Verbindung zwischen dem dübelförmigen Verbindungselement und den die Eckverbindung bildenden Bauteilen wird gemäß einer bevorzugten Ausführungsform erreicht, indem die Mantelfläche des dübelförmigen Verbindungselementes insbesondere zur Klebemittelaufnahme zumindest abschnittsweise aufgeraut ausgebildet ist.

Insbesondere für den Fall, dass das dübelförmige Verbindungselement ohne Befestigungsschraube in den Bauteilen verankert werden soll, hat es sich als vorteilhaft herausgestellt, wenn im Wesentlichen die gesamte Mantelfläche des dübelförmigen Verbindungselementes aufgeraut ist.

Das dübelförmige Verbindungselement kann also zur Gänze glatt, teilweise aufgeraut oder zur Gänze aufgeraut sein. Eine praktikable Lösung wird gemäß einer weiteren Ausführungsform dabei erreicht, wenn in der Mantelfläche wenigstens eine Rille ausgeformt ist. Diese Rille kann entweder als linienartige Rille, als Drall-, als Warzen- oder auch als Kreuzrille ausgebildet sein.

Versuche des Anmelders haben gezeigt, dass ein kostengünstiger, stabiler und einfach zu verarbeitender Eckverbindungsbeschlag erreicht wird, wenn in der Mantelfläche mehrere in Längsrichtung im Wesentlichen parallel verlaufende Rillen ausgeformt sind, wobei in vorteilhafter Weise vorgesehen ist, dass sich die Rillen im Wesentlichen über die gesamte Länge des dübelförmigen Verbindungselementes erstrecken. Zusätzlich kann wenigstens eine der zwischen den Stirnflächen und der Mantelfläche des dübelförmigen Elementes gebildeten Kanten gefasst ist.

Die Herstellung des Eckverbindungsbeschlages kann aus den verschiedensten Materialien, beispielsweise aus Metall erfolgen. Um die Herstellungskosten niedrig halten zu können, sieht eine weitere Ausführungsform der Erfindung vor, dass der Eckverbindungsbeschlag zumindest teilweise aus Kunststoff hergestellt ist. Ist der Eckverbindungsbeschlag im Wesentlichen zur Gänze aus Kunststoff hergestellt, hat es sich als vorteilhaft herausgestellt, wenn der Eckverbindungsbeschlag von einem Kunststoffspritzgussteil gebildet ist, wobei sich insbesondere die Herstellung des Eckverbindungsbeschlages aus glasfaserverstärktem Kunststoff als besonders vorteilhaft für die Lebensdauer des Eckverbindungsbeschlages herausgestellt hat.

Weiters soll eine Eckverbindung, insbesondere Möbeleckverbindung, zwischen zwei im Wesentlichen rechtwinkelig aneinander stoßenden Bauteilen, die über einen Dübel und einen Winkel miteinander verbunden sind, angegeben werden, wobei der der Dübel und der Winkel einstückig in Form eines Eckverbindungsbeschlags nach einem der Ansprüche 1 bis 22 ausgebildet sind.

Eine besonders stabile Eckverbindung ergibt sich dabei, wenn wie ein weiteres Ausführungsbeispiel der Erfindung vorsieht, der Eckverbindungsbeschlag mit dem im Befestigungselement angeordneten Befestigungsmittel im Querschnitt im Wesentlichen h-förmig angeordnet ist, wobei das dübelförmige Verbindungselement den langen Schenkel, das Befestigungsmittel den kurzen Schenkel und das Befestigungselement den Querbalken zwischen den beiden Schenkeln des h-förmigen Eckverbindungsbeschlages bildet.

Weiters soll ein Verfahren zum Herstellen einer Eckverbindung, insbesondere Möbeleckverbindung, zwischen zwei im Wesentlichen rechtwinkelig aneinander stoßenden Bauteilen mit einem Eckverbindungsbeschlag nach einem der Ansprüche 1 bis 23 angegeben werden, gemäß dem die beiden Endabschnitte des dübelförmigen Verbindungselementes jeweils in korrespondierende Aufnahmeöffnungen eingreifen, wobei eine erste Aufnahmeöffnung an der Stirnseite eines ersten Bauteiles und eine zweite Aufnahmeöffnung in der Hauptebene eines zweiten Bauteiles ausgebildet ist und die Befestigung des Befestigungselementes mittels des Befestigungsmittels am zweiten Bauteil erfolgt.

Dabei kann das Befestigungsmittel in einfacher Weise positionsgenau eingebracht werden, wenn das Befestigungsmittel in eine korrespondierende, am zweiten Bauteil ausgebildete Aufnahmeöffnung eingebracht wird, wobei eine bevorzugte Ausführungsform der Erfindung vorsieht, dass wenigstens eine der Aufnahmeöffnungen von einem Sackloch gebildet wird.

Weitere Vorteile und Einzelheiten der Erfindung werden in der nachfolgenden Figurenbeschreibung unter Bezugnahme auf die in der Zeichnung dargestellten Ausführungsbeispiele näher erläutert. Darin zeigt:

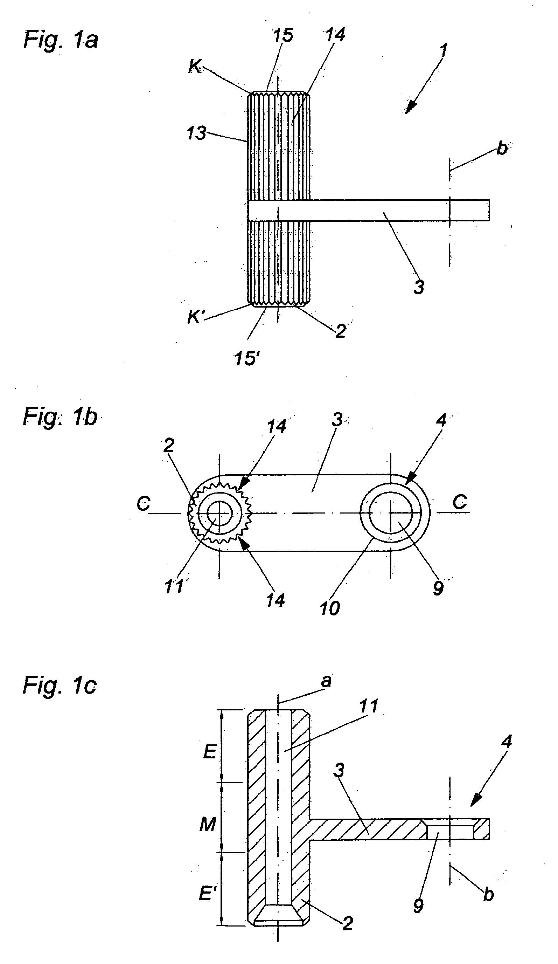

- Fig. 1 a: eine Seitenansicht eines ersten Ausführungsbeispieles eines erfindungsgemäßen Eckverbindungsbeschlages,
- Fig. 1b: eine Draufsicht auf den Eckverbindungsbeschlag gemäß Fig. 1a,
- Fig. 1 c: einen Schnitt entlang C-C aus Fig. 1b,
- Fig. 2a: einen Querschnitt durch eine hergestellte Eckverbindung,
- Fig. 2b: eine Draufsicht auf eine Möbeleckverbindung,
- Fig. 3a, 3b: alternative Ausführungsbeispiele eines Eckverbindungsbeschlages,
- Fig. 4: eine Explosionsdarstellung einer Eckverbindung zwischen zwei Bauteilen und
- Fig. 5a-5h: die einzelnen Arbeitsschritte eines erfindungsgemäßen Herstellungs- verfahrens für eine Eckverbindung zwischen zwei Bauteilen.

Bei dem in den Fig. 1a bis 1c dargestellten Ausführungsbeispiel wird der erfindungsgemäße Eckverbindungsbeschlag 1 von einem Kunststoffspritzgussteil gebildet und weist ein dübelförmiges Verbindungselement 2, an dem ein seitlich abstehendes plattenförmiges Befestigungselement 3 ausgebildet ist, auf.

Das dübelförmige Verbindungselement 2 ist zylinderförmig ausgebildet, wobei die Kanten K, K' zwischen den Stirnflächen 15, 15' und der Mantelfläche 13 gefast sind. Die Mantelfläche 13 weist bei diesem Ausführungsbeispiel mehrere zur Längsachse a des dübelförmigen Verbindungselementes 2 parallel verlaufende Rillen 14 auf, sodass im Wesentlichen die gesamte Manteloberfläche 13 aufgeraut ist.

Das plattenförmige Befestigungselement 3 ist in einen Mittelabschnitt M des dübelförmigen Verbindungselementes 2 ausgebildet und weist eine Aufnahme 4 mit einem geschlossenen Umfangsrand 10 und einer Durchtrittsöffnung 9 für ein Befestigungsmittel 8 auf. Ebenso ist im Verbindungselement 2 eine Durchtrittsöffnung 11 für ein weiteres Befestigungsmittel 12 angeordnet, wobei die Durchtrittsöffnungen 9, 11, die beispielsweise gebohrt sein können, derart angeordnet sind, dass ihre Längsachsen a,b im Wesentlichen parallel zueinander verlaufen.

Es sei darauf hingewiesen, dass die Darstellung der Endabschnitte E, E' sowie des Mittelabschnittes M des Verbindungselementes 2 in Fig. 1c lediglich dem besseren Verständnis dient und keineswegs mit den tatsächlichen Größen übereinstimmen muss. Praktisch wird der Mittelabschnitt M des Verbindungselementes 2 der Plattenstärke des Befestigungselementes 3 entsprechen, wobei eine Grundidee der Erfindung darin besteht, das plattenförmige Befestigungselement 3 am Verbindungselement 2 derart auszubilden, dass jeweils beide Endabschnitte E, E' in unterschiedliche Bauteile 6, 7 eingreifen können, sodass das Verbindungselement 2 zwischen den Bauteilen 6, 7 als Dübel wirkt. Das heißt, die Längserstreckung der beiden Endabschnitte E, E' sollte ausreichend gewählt sein, um die bei einer Eckverbindung 5 auftretenden Scherkräfte aufnehmen zu können. Versuche des Anmelders haben ergeben, dass diese Anforderungen erfüllt werden, wenn die beiden Endabschnitte E, E' in etwa gleich lang sind, dh wenn der Eckverbindungsbeschlag 1 im Wesentlichen T-förmig ausgebildet ist.

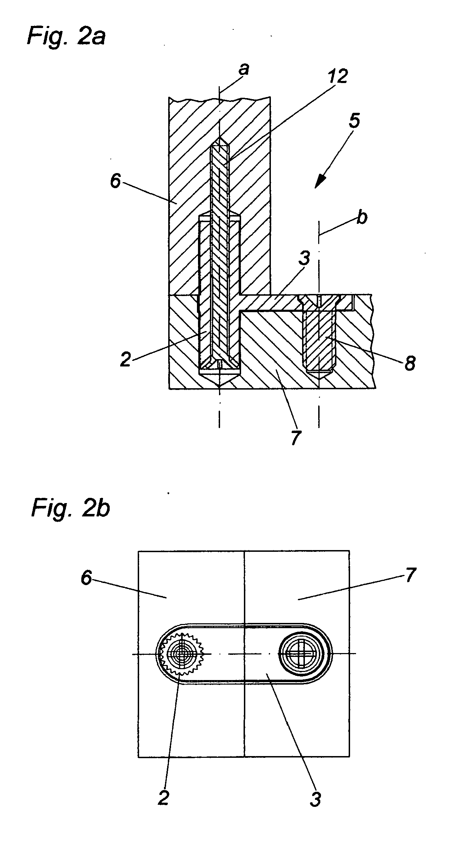

Fig. 2a und 2b zeigen eine hergestellte Eckverbindung 5 zwischen zwei Bauteilen 6, 7 in einem Querschnitt und in einer Draufsicht. Die beiden Bauteile 2,7 sind dabei kantengleich und bündig zueinander angeordnet. Dabei hält das dübelförmige Verbindungselement 2 die beiden Bauteile 6 und 7 in der gewünschten Position zusammen und gibt der Eckverbindung 5 Stabilität gegen seitliche Belastung. Ob die Verbindung zwischen dem dübelförmigen Verbindungselement 2 und den Bauteilen 6, 7 formschlüssig, kraftschlüssig oder stoffschlüssig erfolgt, spielt dabei eine untergeordnete Rolle. Beim gezeigten Ausführungsbeispiel ist das Verbindungselement 2 mit den Bauteilen 6, 7 verklebt und wird im ersten Bauteil 6 zusätzlich über ein Befestigungsmittel 12, beispielsweise eine Schraube, befestigt. Das plattenförmige Befestigungselement 3 wirkt als Winkel und dient bei eingebrachtem Befestigungsmittel 8 einerseits zur zusätzlichen Befestigung des Bauteiles 6 auf dem Bauteil 7, andererseits zur Erhöhung der Stabilität der Dübelwirkung des Verbindungselementes 2 und zusätzlich zum vollständigen Einbringen und Verspannen des unteren Endabschnittes E' des dübelförmigen Verbindungselementes 2 in den Bauteil 7.

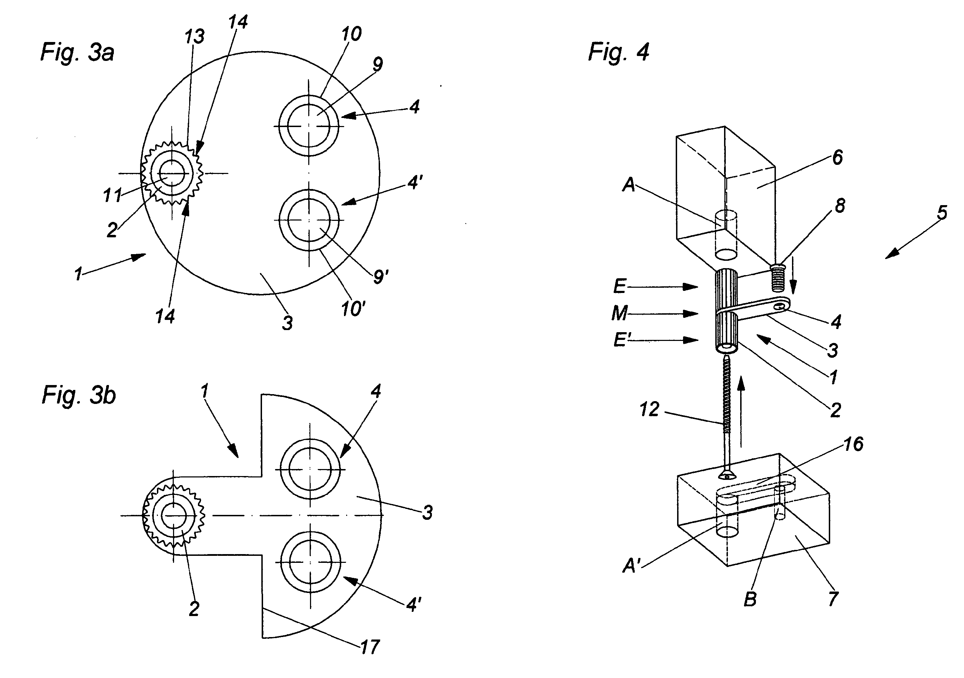

Die Fig. 3a und 3b zeigen weitere Ausgestaltungsmöglichkeiten eines erfindungsgemäßen Eckverbindungsbeschlages 1 jeweils in einer Draufsicht. Dabei ist das plattenförmige Befestigungselement 3 des Eckverbindungsbeschlages 1 als kreisförmige Scheibe ausgebildet, die wiederum mit einem dübelförmigen Verbindungselement 2 einstückig ausgebildet ist. Das Befestigungselement 3 weist zwei voneinander beabstandete Aufnahmen 4, 4' für (nicht dargestellte) Befestigungsmittel 8, 8' auf. Diese Aufnahmen 4, 4' sind als Durchtrittsöffnungen 9, 9' mit geschlossenem Umfang 10, 10' ausgebildet, dh das Befestigungselement 3 weist zwei Durchgangsbohrungen für in das Bauteil 7 einzubringende Befestigungsmittel 8, 8' auf.

Das Verbindungselement 2 entspricht dem in Fig. 1a bis 1c dargestellten Ausführungsbeispiel, weshalb auf eine nochmalige Beschreibung verzichtet wird.

Das Ausführungsbeispiel gemäß Fig. 3b weist ebenfalls zwei Aufnahmen 4, 4' auf und unterscheidet sich vom Ausführungsbeispiel gemäß Fig. 3a lediglich in der Formgebung des Befestigungselementes 3. Dabei ist das plattenförmige Befestigungselement 3 pilzförmig ausgebildet ist und weist eine im Wesentlichen halbkreisförmige Scheibe mit den zwei Aufnahmen 4, 4' für Befestigungsmittel 8, 8' und einen länglichen Abschnitt, in dem das Befestigungselement 3 mit dem dübelförmigen Verbindungselement 2 verbunden ist, auf. Die Montage erfolgt dabei vorteilhaftermaßen derart, dass die Sehne 17 der halbkreisförmigen Scheibe im Wesentlichen parallel zur Innenseite des Bauteiles 6 verläuft.

Bei den beiden Ausführungsbeispielen gemäß Fig. 3a und 3b erfolgt die Befestigung des Befestigungselementes 3 am Bauteil 7 also über zwei Befestigungsmittel 8, 8'. Das hat den Vorteil, dass die beiden Befestigungsmittel 8, 8' von zwei kurzen Schrauben gebildet werden können, sodass das ansonsten übliche Herstellen einer Aufnahmeöffnung B im Bauteil 7 für das Befestigungsmittel 8, 8' gegebenenfalls unterbleiben kann. Dies trifft bei Auswahl eines entsprechenden Befestigungsmittels 8 auch dann zu, wenn die Befestigung des Befestigungselementes 3 über nur ein Befestigungsmittel 8 erfolgt.

Fig. 4 zeigt in einer Explosionsdarstellung eine Eckverbindung 5 zwischen zwei Bauteilen 6, 7 unter Verwendung eines erfindungsgemäßen Eckverbindungsbeschlages 1. Das Bauteil 6 weist eine Aufnahmeöffnung A in Form einer Sackbohrung für den Endabschnitt E des dübelförmigen Verbindungselementes 2 des Eckverbindungsbeschlages 1 auf. Zusätzlich wird das Verbindungselement 2 mit dem Bauteil 6 über eine in eine Durchtrittsöffnung 11 des Verbindungselementes 2 einzubringende Schraube 12 fest verbunden.

Analog dazu weist das Bauteil 7 eine Aufnahmeöffnung A' in Form einer Sackbohrung für den unteren Endabschnitt E' des Verbindungselementes 2 auf. Die Befestigung des Verbindungselementes 2 in den Aufnahmeöffnungen A, A' der Bauteile 6, 7 erfolgt beim gezeigten Ausführungsbeispiel über ein Klebemittel, beispielsweise Leim, weshalb die Mantelfläche des Verbindungselementes 2 umlaufend mit Rillen 14 zur Aufnahme des Klebemittels versehen ist.

Neben der Aufnahmeöffnung A' für den unteren Endabschnitt E' des Verbindungselementes 2 weist das Bauteil 7 eine weitere Aufnahmeöffnung B für das Befestigungsmittel 8, welches durch die Durchtrittsöffnung 9 im Befestigungselement 3 eingebracht wird, auf. Damit die Bauteile 6, 7 bündig aneinander liegen, weist das Bauteil 7 weiters eine Ausnehmung 16 auf, die beispielsweise durch Fräsen hergestellt sein kann und die in ihrer Form und Größe im Wesentlichen dem plattenförmigen Befestigungselement 3 entspricht.

Selbstverständlich wäre es ebenfalls möglich, die Ausnehmung 16 für das Befestigungselement 3 am Bauteil 6 auszubilden. In diesem Fall würde der gegenüber dem Bauteil 6 vorstehende Abschnitt des Befestigungselementes 3 bei hergestellter Eckverbindung 5 auf der Oberseite des Bauteiles 7 angeordnet sein, während beim gezeigten Ausführungsbeispiel das Befestigungselement 3 der hergestellten Eckverbindung 5 oberflächenbündig im Bauteil 7 angeordnet ist.

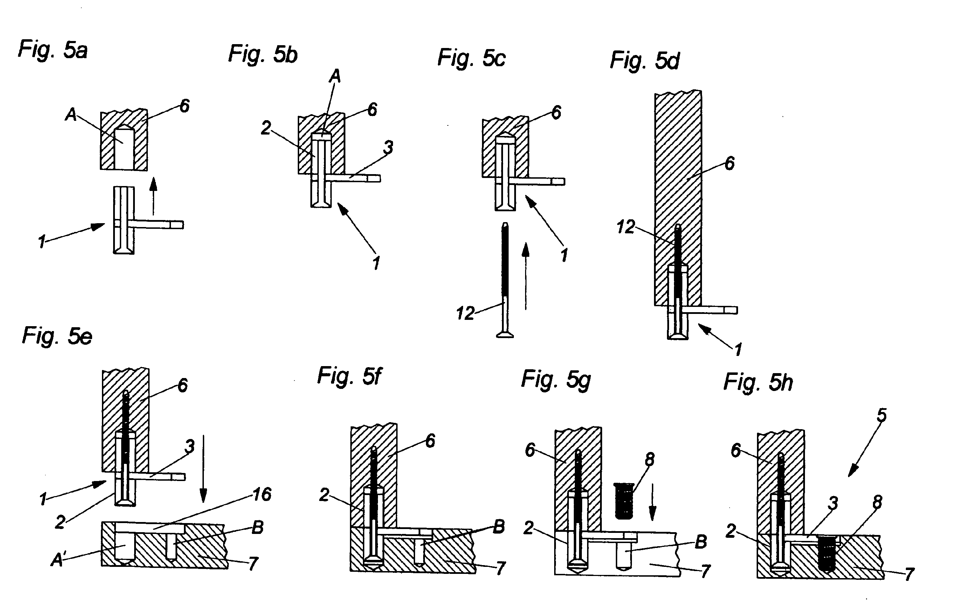

In den Fig. 5a bis 5h sind die einzelnen Arbeitsschritte zur Herstellung einer Eckverbindung 5 gemäß einem ersten Ausführungsbeispiel eines erfindungsgemäßen Herstellungsverfahrens dargestellt. Dabei wird in einem ersten Schritt der Eckverbindungsbeschlag 1 in eine Aufnahmeöffnung A, beispielsweise einem Sackloch, des Bauteiles 6 in Pfeilrichtung eingebracht (Fig. 5a). Die Befestigung des Eckverbindungsbeschlages 1 über das dübelförmige Verbindungselement 2 in der Aufnahmeöffnung A des Bauteiles 6 (Fig. 5b) kann dabei über ein Klebemittel erfolgen.

Zusätzlich kann der Eckverbindungsbeschlag 1 über ein in eine Durchtrittsöffnung 11 des Verbindungselementes 2 einzubringendes Befestigungsmittel 12 mit dem Bauteil 6 verbunden werden (Fig. 5c und 5d).

Als nächstes wird - wie in Fig. 5e dargestellt - das Bauteil 6 mit dem daran befestigten Eckverbindungsbeschlag 1 mit dem Bauteil 7 verbunden. Dazu wird der freie Endabschnitt des Verbindungselementes 2 in eine Aufnahmeöffnung A', die wiederum von einem Sackloch gebildet ist, eingebracht, wobei die Befestigung wiederum über ein Klebemittel erfolgen kann. Um das plattenförmige Befestigungselement 3 im Wesentlichen obeflächenbündig mit dem Bauteil 7 verbinden zu können (Fig. 5f), weist das Bauteil 7 eine Ausnehmung 16, die in ihrer Form und Größe dem Befestigungselement 3 entspricht.

Als nächstes folgt wie in Fig. 5g gezeigt eine zusätzliche Befestigung der beiden Bauteile 6 und 7 über das in die Aufnahme 4 des Befestigungselementes 3 einbringbare Befestigungsmittel 8, sodass wie aus Fig. 5h ersichtlich, der Eckverbindungsbeschlag 1 mit dem im Befestigungselement 3 angeordneten Befestigungsmittel 8 im Querschnitt im Wesentlichen h-förmig angeordnet ist, wobei das dübelförmige Verbindungselement 2 den langen Schenkel, das Befestigungsmittel 8 den kurzen Schenkel und das Befestigungselement 3 den Querbalken zwischen den beiden Schenkeln der h-förmigen Anordnung bildet.

Um beim Einbringen des Befestigungselementes 8 einen zusätzlichen Zugeffekt zu erreichen, kann die Ausnehmung 16 etwas tiefer als die Plattenstärke des Befestigungselementes 3 ausgebildet sein.

Wenn auch die Erfindung anhand der gezeigten Ausführungsbeispiele konkret beschrieben wurde, versteht es sich von selbst, dass der Anmeldungsgegenstand nicht auf diese Ausführungsbeispiele beschränkt ist. Vielmehr sind Maßnahmen und Abwandlungen, die dazu dienen, den Erfindungsgedanken eines Eckverbindungsbeschlages, der als Dübel mit daran angeordnetem Winkel bzw. als Winkel mit einem zusätzlichen Zapfen dient, umzusetzen, durchaus denkbar und erwünscht.

So könnte beispielsweise die Befestigung des dübelförmigen Verbindungselementes 2 in den Aufnahmeöffnungen A, A' der beiden Bauteile 6,7 auch nur über eine Verformung der an der Manteloberfläche 13 ausgeformten Rillen 14 erfolgen. In diesem Zusammenhang sei weiters darauf hingewiesen, dass die Verwendung des in das dübelförmige Verbindungselement 2 einbringbaren Befestigungsmittels 12 optional ist und keine Grundvoraussetzung für die Stabilität der Eckverbindung darstellt. Andererseits kann bei Verwendung eines Befestigungsmittels 12 für das dübelförmige Verbindungselement 2 die Mantelfläche 13 des Endabschnittes E, der dann im Bauteil 6 über das Befestigungsmittel 12 befestigt ist, glatt ausgebildet sein.

## Patentansprüche

1. Eckverbindungsbeschlag, insbesondere für Möbel, mit einem dübelförmigen Verbindungselement und einem plattenförmigen Befestigungselement mit wenigstens einer Aufnahme für ein Befestigungsmittel, wobei das dübelförmige Verbindungselement und das plattenförmigen Befestigungselement miteinander verbunden sind und im Wesentlichen Normal zueinander verlaufen, **dadurch gekennzeichnet, dass** das dübelförmige Verbindungselement (2) zwei Endabschnitte (E, E') und einen Mittelabschnitt (M) aufweist und das plattenförmige Befestigungselement (3) im Mittelabschnitt (M) des dübelförmigen Verbindungselementes (2) mit diesem verbunden ist.

2. Eckverbindungsbeschlag nach Anspruch 1, **dadurch gekennzeichnet, dass** der Eckverbindungsbeschlag (1) zwischen den die Eckverbindung (5) bildenden Bauteilen (6, 7) über das dübelförmige Verbindungselement (2) als die Bauteile (6,7) verbindender Dübel und über das plattenförmige Befestigungselement (3) und einen der beiden Endabschnitte (E, E') als die Bauteile (6, 7) verbindender Winkel ausgebildet ist.

3. Eckverbindungsbeschlag nach Anspruch 1 oder 2, **dadurch gekennzeichnet, dass** das dübelförmige Verbindungselement (2) und das plättenförmige Befestigungselement (3) fest miteinander verbunden sind.

4. Eckverbindungsbeschlag nach Anspruch 1 bis 3, **dadurch gekennzeichnet, dass** das dübelförmige Verbindungselement (2) und das plattenförmige Befestigungselement (3) einstückig ausgebildet sind.

5. Eckverbindungsbeschlag nach einem der Ansprüche 1 bis 4, **dadurch gekennzeichnet, dass** dübelförmige Verbindungselement (2) und das plattenförmige Befestigungselement (3) im Wesentlichen T-förmig miteinander verbunden sind.

6. Eckverbindungsbeschlag nach einem der Ansprüche 1 bis 5, **dadurch gekennzeichnet, dass** wenigstens ein Befestigungsmittel (8) zum dübelförmigen Verbindungselement (2) im Wesentlichen parallel verlaufend am Befestigungselement (3) angeordnet bzw. anordenbar ist.

7. Eckverbindungsbeschlag nach einem der Ansprüche 1 bis 6, **dadurch gekennzeichnet, dass** die Aufnahme (4, 4') eine Durchtrittsöffnung (9, 9') aufweist.

8. Eckverbindungsbeschlag nach einem der Ansprüche 1 bis 6, **dadurch gekennzeichnet, dass** die Aufnahme (4, 4') einen geschlossenen Umfangsrand (10, 10') aufweist.

9. Eckverbindungsbeschlag nach einem der Ansprüche 1 bis 8, **dadurch gekennzeichnet, dass** wenigstens ein Befestigungsmittel (8) von einer in die Aufnahme (4, 4') des Befestigungselementes (3) einbringbaren Schraube gebildet ist.

10. Eckverbindungsbeschlag nach einem der Ansprüche 1 bis 9, **dadurch gekennzeichnet, dass** das dübelförmige Verbindungselement (2) eine in Längsrichtung verlaufende Durchtrittsöffnung (11) zur Aufnahme eines weiteren Befestigungsmittels (12) aufweist.

11. Eckverbindungsbeschlag nach Anspruch 10, **dadurch gekennzeichnet, dass** das weitere Befestigungsmittel (12) von einer Befestigungsschraube gebildet ist.

12. Eckverbindungsbeschlag nach Anspruch 10 oder Anspruch 11, **dadurch gekennzeichnet, dass** das wenigstens eine Befestigungsmittel (8) für das Befestigungselement (3) und das weitere Befestigungsmittel (12) für das dübelförmige Verbindungselement (2) derart angeordnet bzw. anordenbar sind, dass das wenigstens eine Befestigungsmittel (8) und das weitere Befestigungsmittel (12) bei hergestellter Eckverbindung (5) in verschiedene Bauteile (6, 7) der Eckverbindung (5) eingreifen.

13. Eckverbindungsbeschlag nach einem der Ansprüche 1 bis 12, **dadurch gekennzeichnet, dass** die Mantelfläche (13) des dübelförmigen Verbindungselementes (2) insbesondere zur Klebemittelaufnahme zumindest abschnittsweise aufgeraut ausgebildet ist.

14. Eckverbindungsbeschlag nach Anspruch 13, **dadurch gekennzeichnet, dass** im Wesentlichen die gesamte Mantelfläche (13) des dübelförmigen Verbindungselementes (2) aufgeraut ist.

15. Eckverbindungsbeschlag nach Anspruch 13 oder Anspruch 14, **dadurch gekennzeichnet, dass** in der Mantelfläche (13) wenigstens eine Rille (14) ausgeformt ist.

16. Eckverbindungsbeschlag nach einem der Ansprüche 13 bis 15, **dadurch gekennzeichnet, dass** in der Mantelfläche (13) mehrere in Längsrichtung im Wesentlichen parallel verlaufende Rillen (14) ausgeformt sind.

17. Eckverbindungsbeschlag nach Anspruch 15 oder Anspruch 16, **dadurch gekennzeichnet, dass** sich die Rille(n) (14) im Wesentlichen über die gesamte Länge des dübelförmigen Verbindungselementes (2) erstreckt bzw. erstrecken.

18. Eckverbindungsbeschlag nach einem der Ansprüche 1 bis 17, **dadurch gekennzeichnet, dass** wenigstens eine der zwischen den Stirnflächen (15, 15') und der Mantelfläche (13) des dübelförmigen Verbindungselementes (2) gebildeten Kanten (K, K') gefast ist.

19. Eckverbindungsbeschlag nach einem der Ansprüche 1 bis 18, **dadurch gekennzeichnet, dass** der Eckverbindungsbeschlag (1) zumindest teilweise aus Kunststoff hergestellt ist.

20. Eckverbindungsbeschlag nach Anspruch 19, **dadurch gekennzeichnet, dass** der Eckverbindungsbeschlag (1) im Wesentlichen zur Gänze aus Kunststoff hergestellt ist.

21. Eckverbindungsbeschlag nach Anspruch 20, **dadurch gekennzeichnet, dass** der Eckverbindungsbeschlag (1) aus glasfaserverstärktem Kunststoff hergestellt ist.

22. Eckverbindungsbeschlag nach Anspruch 20 oder Anspruch 21, **dadurch gekennzeichnet, dass** der Eckverbindungsbeschlag (1) von einem Kunststoffspritzgussteil gebildet ist.

23. Eckverbindung, insbesondere Möbeleckverbindung, zwischen zwei im Wesentlichen rechtwinkelig aneinander stoßenden Bauteilen, die über einen Dübel und einen Winkel miteinander verbunden sind, **dadurch gekennzeichnet, dass** der Dübel und der Winkel einstückig in Form eines Eckverbindungsbeschlags (1) nach einem der Ansprüche 1 bis 22 ausgebildet sind.

24. Eckverbindung nach Anspruch 23, **dadurch gekennzeichnet, dass** der Eckverbindungsbeschlag (1) mit dem im Befestigungselement (3) angeordneten Befestigungsmittel (8) im Querschnitt im Wesentlichen h-förmig angeordnet ist, wobei das dübelförmige Verbindungselement (2) den langen Schenkel, das Befestigungsmittel (8) den kurzen Schenkel und das Befestigungselement (3) den Querbalken zwischen den beiden Schenkeln bildet.

25. Verfahren zum Herstellen einer Eckverbindung, insbesondere Möbeleckverbindung, zwischen zwei im Wesentlichen rechtwinkelig aneinander stoßenden Bauteilen mit einem Eckverbindungsbeschlag nach einem der Ansprüche 1 bis 23, **dadurch gekennzeichnet, dass** die beiden Endabschnitte (E, E') des dübelförmigen Verbindungselementes (2) jeweils in korrespondierende Aufnahmeöffnungen (A, A') eingreifen, wobei eine erste Aufnahmeöffnung (A) an der Stirnseite eines ersten Bauteiles (6) und eine zweite Aufnahmeöffnung (A') in der Hauptebene eines zweiten Bauteiles (7) ausgebildet ist und die Befestigung des Befestigungselementes (3) mittels des Befestigungsmittels (8) am zweiten Bauteil (7) erfolgt.

26. Verfahren nach Anspruch 25, **dadurch gekennzeichnet, dass** das Befestigungsmittel (8) in eine korrespondierende, am zweiten Bauteil (7) ausgebildete Aufnahmeöffnung (B) eingebracht wird.

27. Verfahren nach Anspruch 25 oder Anspruch 26, **dadurch gekennzeichnet, dass** wenigstens eine der Aufnahmeöffnungen (A, A', B) von einem Sackloch gebildet wird.
